# EUROPEAN PATENT APPLICATION

(11) **EP 2 020 646 A2**
(43) Date of publication of application: **04.02.2009**
(21) Application number: 08160659.2
(22) Date of filing: 17.07.2008
(51) Int. Cl.: G07G 1/00

(54) **A method of purchasing products and apparatus for implementing the method**

(30) Priority: 31.07.2007 IT PD20070263
(71) Applicant: Zampieri, Willi, 35027 Noventa Padovana (PD) (IT)
(72) Inventor: Zampieri, Willi, 35027 Noventa Padovana (PD) (IT)
(74) Representative: Fabris, Stefano

(57) **Abstract**

A method (1) of purchasing products at a sales point, comprising the steps of:
- providing (10) a plurality of first recording means (3), each of which can store one or more items of data relating to a respective product (2),
- providing (20) a plurality of first transmission means (4) each associated with a respective first recording means in order to transmit the data,
- fixing (30) each of the first transmission means (4) to the respective product (2),
- providing (40) means for transporting the products (2)within the sales point, comprising a container (9a, 9b) in which a plurality of the products can be housed, first receiving means (11) for receiving the data transmitted by the first transmission means (4), and second transmission means (12) for transmitting information relating to the products housed in the container (9a, 9b),
- providing (50), at the sales point, second receiving means (18) for receiving the information.

## Description

The subject of the present invention is a method of purchasing products of the type including the characteristics mentioned in the preamble to the main claim and apparatus for implementing the method.

In a more general sphere of the movement of goods and products, it is known to use automatic product-identification systems which use devices operating at radio frequency in accordance with a technology also known by the acronym RFID ("Radio Frequency IDentification"). This technology provides for the application, to each object to be identified, of a corresponding label or other identification element comprising:
- an integrated microcircuit in which one or more items of data relating to the object such as, for example, an identification code, are stored, and
- an antenna which can receive or transmit a radio signal.

The data relating to the object is stored in the microcircuit by means of the antenna. The same data can subsequently be read automatically, by means of the same antenna, by a reader comprising a radio-wave receiver.

This technology has several advantages over other identification systems, for example, optical systems. Amongst these advantages in particular are reliability of reading, the elimination of the need to orient the identification element suitably relative to the reader, and the ability to identify a large number of objects in a short period of time.

This technology can advantageously also be used at a sales point, in particular a self-service sales point, for the identification of the products selected by the purchaser and the calculation of the total price.

However, in this particular field, the main disadvantage of the reading of a plurality of RFID labels arranged loosely in a container such as, for example, a shopping basket or trolley, is that it can operate reliably only at short distances. The radio signal is weakened especially when liquid masses are interposed between the RFID label and the reader.

To be sure of identifying all of the products in the basket or trolley it is therefore necessary to remove them one by one, thus losing the advantage of the speed of the radio-frequency reading system over the conventional bar-code system.

The main object of the present invention is to provide a method of purchasing products and apparatus for implementing the method which are designed structurally and functionally to overcome all of the disadvantages discussed with reference to the prior art mentioned.

This object and others which will become clearer from the following description are addressed and achieved by the invention by means of a method of purchasing products and apparatus for implementing the method according to the appended claims.

The characteristics and the advantages of the invention will become clear from the detailed description of a preferred but not exclusive embodiment thereof which is described by way of non-limiting example with reference to the appended drawings, in which:
- Figure 1 is a diagram of a method according to the invention,
- Figures 2 to 5 are respective schematic views of details of apparatus formed in accordance with the invention,
- Figure 6 is a plan view of a detail of apparatus formed in accordance with the invention, and

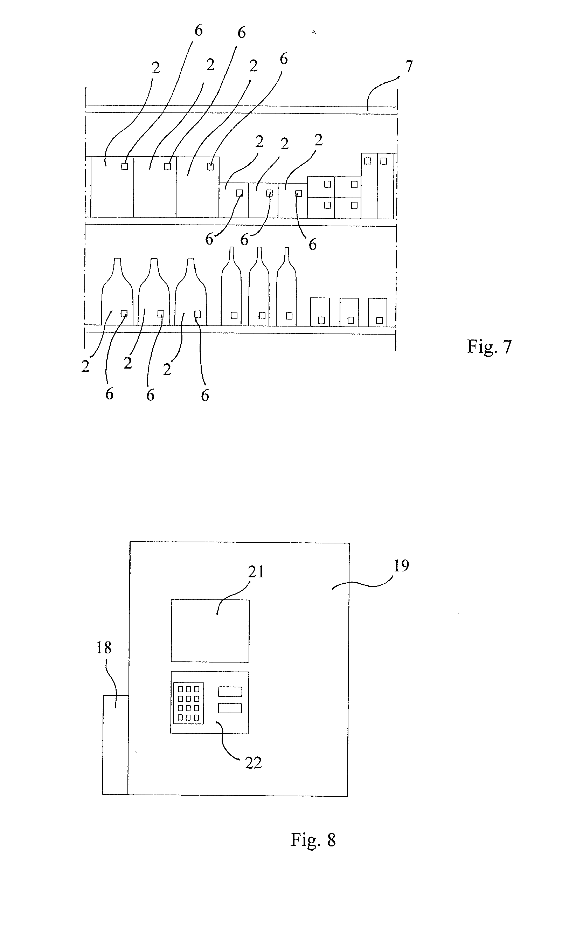

- Figures 7 and 8 are schematic views of respective details of a sales point in which the method of Figure 1 is used.

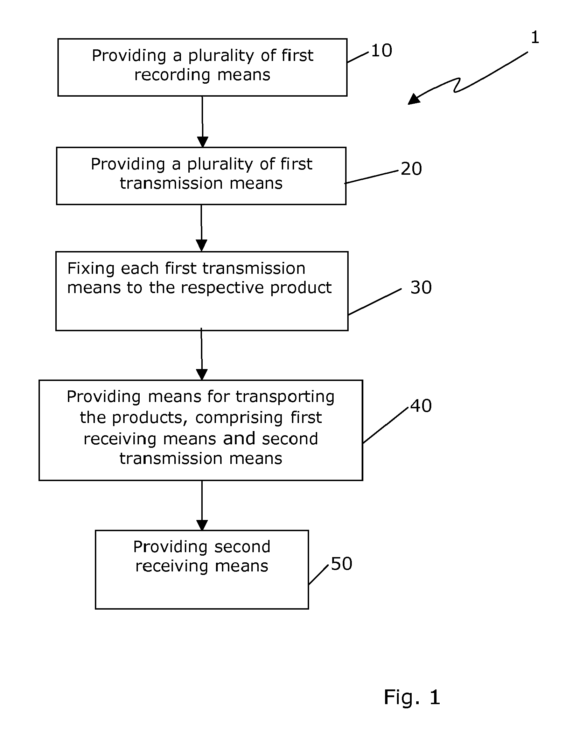

With reference to Figures 1 *et seq.,* a method of purchasing products, generally indicated 1, provides for a first step 10 of providing a plurality of first recording means each capable of storing one or more items of data relating to a respective product 2. The items of data comprise a numerical code identifying the product 2. Each of the first recording means is constituted by a non-volatile electronic storage device included in an integrated microcircuit 3. The method 1 comprises a further step 20 of providing a plurality of first transmission means each associated with a respective integrated microcircuit 3 in order to transmit the data contained therein. Each of the first transmission means is constituted by an antenna device 4 for transmitting radio waves.

One microcircuit 3 and one antenna 4 are incorporated in a passive 13.56 MHz RFID identification device 5, that is, a device which operates in accordance with the physical principle of induction when immersed in an external electromagnetic field. Any other type of RFID device may advantageously be used for the purposes of the present invention, even if it is active or operates at a frequency other than 13.56 MHz. The identification device 5 is almost flat in shape and is incorporated in an adhesive label 6. The method 1 comprises a further step 30 of applying the adhesive label 6 to the respective product 2 so as to fix it firmly thereto.

Each of the products 2 with its adhesive label 6 is arranged on shelving 7 in a sales point, for example a supermarket, in conventional manner.

The method 1 comprises a further step 40 of providing means for transporting the products 2 within the sales point. The transporting means consist of a plurality of wheeled trolleys 8 or, in accordance with a variant of the invention, a plurality of baskets (not shown) which can by carried by hand by a purchaser within the sales point.

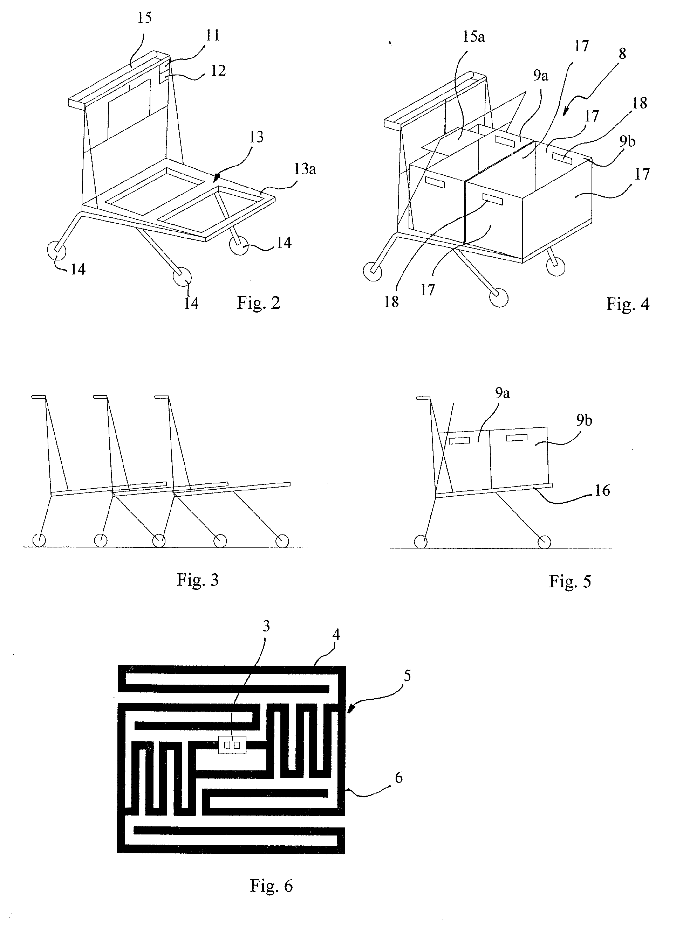

The trolley 8 comprises a trolley structure 13 provided with a plurality of wheels 14 and a support 15 for the user's hands so that it can easily be pushed within the sales point. The structure 13 has a child seat 15a and is configured in a manner such that two structures 13 can be fitted one within the other so as to minimize the space occupied, as indicated in Figure 3. The trolley 8 further comprises a plurality of containers 9a, 9b (two containers in the embodiment of Figures 4 and 5) each having a base 16, side walls 17, and a pair of handles 18. A plurality of products 2 can be housed in the containers 9a, 9b. The containers 9a, 9b are restrained releasably on a base 13a of the structure 13 by releasable fastening means and complementary fastening means (not shown) arranged on the containers 9a, 9b and on the structure 13, respectively. The fastening means and the complementary fastening means are constituted, for example, by snap-fastening means.

The containers 9a, 9b are rigid and are shaped in a manner such that they can easily be stacked one upon another. The containers 9a, 9b are of the collapsible type since the side walls 17 can be folded down so as to minimize the space occupied by the containers 9a, 9b when they are not in use for transporting products 2.

According to a variant of the invention, the containers 9a, 9b are of the bag type.

The trolley 8 further comprises first receiving means for receiving the data transmitted by the device 5 of the label 6 and second transmission means for transmitting information relating to the products housed in the containers 9a, 9b. The first receiving means on the trolley 8 is constituted by a radio-wave receiver 11 which can receive the data transmitted by the device 5 and is arranged on the structure 13 in the vicinity of the containers 9a, 9b. The second transmission means on the trolley 8 is constituted by a radio-wave transmitter 12 which is connected to the receiver 11 and is also arranged on the structure 13. The information transmitted by the transmitter 12 corresponds to the data received by the receiver 11, that is, to the data transmitted by each of the devices 5 of the products 2 housed in the containers 9a, 9b. The assembly comprising the receiver 11 and the transmitter 12 thus acts as a repeater and/or amplifier of the radio signals coming from the devices 5 of the products 2 housed in the containers 9a, 9b.

In a variant of the invention, the receiver 11 and the transmitter 12 are arranged on one or on both of the containers 9a, 9b.

In the variant which provides for the use of baskets instead of trolleys 8, the baskets have a configuration similar to that of the containers 9a, 9b with the receiver 11 and the transmitter 12 arranged directly on each basket.

In a further variant of the invention, the means for transporting the products 2 comprises second recording means (not shown) for storing the data received from the devices 5. The second recording means is constituted, for example, by an electronic storage device. According to this variant, the information transmitted by the transmitter 12 represents a computation of the data received from the receiver 11, for example, the sum of the prices of the products contained in the container 9a, 9b.

The method 1 comprises a further step 50 in which a second receiving means is provided in the sales point, for receiving the data transmitted by the transmitter 12. The second receiving means is constituted by a second radio-wave receiver 18 and is disposed in an area of the sales point comprising a till 19 connected to the receiver 18 and a device which can emit an electromagnetic field to activate the devices 5. When the trolley 8 containing a plurality of products 2 passes through this area, the corresponding identification devices 5 of the labels 6 are activated in order to communicate with the receiver 11. The second receiver 18 receives the information relating to the products in the trolley 8 from the transmitter 12 and transmits it to the till 19.

The till 19 comprises an electronic device for processing the information transmitted by the transmitter 12; the electronic device is connected to a video device 21 for displaying the characteristics of the products, in particular, both their individual prices and their total price.

The till 19 comprises an automatic payment device 22.

At a sales point in which the method 1 is implemented, a purchaser purchases products in accordance with the steps described below:
a. the purchaser enters the sales point, bringing with him one or more previously purchased or hired containers 9a, 9b; alternatively, the purchaser purchases, hires, or receives the containers 9a, 9b on free loan at the sales point;
b. the purchaser fixes the containers 9a, 9b to a structure 13 provided by the sales point;
c. the purchaser does his shopping in conventional manner by selecting products provided with identification devices 5 from the shelving 7 of the sales point and placing them in the containers 9a, 9b; for products that are not already packaged, for example, fruit, meat and wet fish, the purchaser or an operator of the sales point affixes the label 6 with the identification device 5 to the product;
d. once the selection is completed, the purchaser goes to the till area where the identification devices 5 are activated in order to transmit the data relating to the corresponding products to the receiver 11; the receiver 18 receives the information relating to the products in the containers 9a, 9b from the transmitter 12 and transmits it to the till 19;
e. the purchaser receives from the till the price of the individual products he has selected and the total price and pays via an operator of the sales point or with the use of the automatic payment device 22;
f. the purchaser detaches the containers 9a, 9b from the structure 13 and uses the same containers 9a, 9b to carry home the products purchased;
g. at home, the purchaser takes the products purchased out of the containers 9a, 9b and folds down the side walls 17 so as to be able to keep them at home in a compact form until the next time they are used.

The use of a receiver 11 and a transmitter 12 enables the product data to be read simultaneously and immediately upon passing through a detection area without the need to move the products from the containers 9a, 9b, eliminating waiting at the tills.

The invention thus solves the problem discussed with reference to the prior art mentioned, at the same affording many advantages. Amongst these is the fact that, since the containers 9a, 9b can be removed from the trolley 8, they can be used by the purchaser to transport the shopping after purchase.

## Claims

1. A method (1) of purchasing products at a sales point, comprising the steps of:
- providing (10) a plurality of first recording means (3), each of the means being able to store one or more items of data relating to a respective product (2),
- providing (20) a plurality of first transmission means (4) each associated with a respective first recording means in order to transmit the one or more items of data,
- fixing (30) each first transmission means (4) to the respective product (2),
**characterized in that** it comprises the further steps of:
- providing (40) means (8) for transporting the products (2) within the sales point, the transporting means comprising a container (9a, 9b) in which a plurality of the products (2) can be housed, first receiving means (11) for receiving the one or more items of data transmitted by the first transmission means(4), and second transmission means (12) for transmitting information relating to the products housed in the container (9a, 9b),
- providing (50), at the sales point, second receiving means (18) for receiving the information transmitted by the second transmission means (12).

2. A method (1) according to Claim 1 in which the transporting means (8) comprises second recording means for storing the one or more items of data received from the receiving means.

3. A method (1) according to any one of the preceding claims in which the first (4) and/or second transmission means (12) comprises devices for transmitting radio waves.

4. A method (1) according to Claim 3 and Claim 4 in which one of the non-volatile electronic storage devices and one of the radio-wave transmission devices are incorporated in an RFID identification device (5) that can be attached to each product.

5. A method (1) according to any one of the preceding claims in which the one or more items of data stored in the first recording means (3) comprise an identification code and/or the price of the respective product (2).

6. A method (1) according to any one of the preceding claims in which the information transmitted by the second transmission means (12) comprises an identification code and/or the price of each of the products (2) housed in the container.

7. A method (1) according to any one of the preceding claims in which the first transmission means (4) and the first receiving means (11) are activated in order to communicate with one another solely upon passing through at least one predetermined area of the sales point.

8. A method (1) according to Claim 7 in which the at least one predetermined area comprises at least one till (19).

9. A method (1) according to Claim 7 or Claim 8 in which the till (19) comprises an automatic payment device.

10. A trolley (8) usable as means for transporting products within a sales point, comprising a container (9a, 9b) in which a plurality of the products can be housed, receiving means (11) for receiving the one or more items of data relating to the products, and transmission means (12) for transmitting information relating to the products housed in the container (9a, 9b).

11. A trolley (8) according to Claim 10, comprising a trolley structure (13) on which the container (9a, 9b) can be restrained releasably, the structure (13) comprising complementary fastening means for respective fastening means arranged on the container (9a, 9b).

12. A portable container (9a, 9b) usable as means for transporting products (2) within a sales point, comprising a container in which a plurality of the products (2) can be housed, receiving means (11) for receiving the one or more items of data relating to the products (2), and transmission means (12) for transmitting information relating to the products housed in the container (9a, 9b).

13. A container (9a, 9b) according to Claim 12 in which the container is rigid and collapsible.

14. A container (9a, 9b) according to Claim 12 in which the container is of the bag type.

15. A container (9a, 9b) according to any one of Claims 12 to 14 comprising releasable means for fastening to respective complementary fastening means fixed to a trolley structure (13).
